(19) Europäisches Patentamt
European Patent Office
Office européen des brevets

(11) EP 0 481 344 B2

(12) **NEUE EUROPÄISCHE PATENTSCHRIFT**

(45) Veröffentlichungstag und Bekanntmachung des Hinweises auf die Entscheidung über den Einspruch:
**07.01.1999 Patentblatt 1999/01**

(45) Hinweis auf die Patenterteilung:
**20.09.1995 Patentblatt 1995/38**

(21) Anmeldenummer: **91117220.3**

(22) Anmeldetag: **09.10.1991**

(51) Int. Cl.$^6$: **B32B 27/32**, B32B 15/08, B32B 31/24, B32B 31/26, B32B 31/28, B32B 27/10

(54) **Einseitig niedrig siegelnde, biaxial orientierte Polyolefin-Mehrschichtfolie für die Metallisieranwendung**

One-side low sealable biaxially oriented polyolefine multilayer film for metallisation

Feuille multicouche de polyoléfines, scellable à basse température sur l'une de ses faces et orientée biaxialement pour la métallisation

(84) Benannte Vertragsstaaten:
**DE ES FR GB IT**

(30) Priorität: **13.10.1990 DE 4032588**

(43) Veröffentlichungstag der Anmeldung:
**22.04.1992 Patentblatt 1992/17**

(73) Patentinhaber:
**Hoechst Trespaphan GmbH**
**66539 Neunkirchen (DE)**

(72) Erfinder:
- **Murschall, Ursula, Dr.**
  **W-6505 Nierstein (DE)**
- **Peiffer, Herbert, Dr.**
  **W-6500 Mainz-Finthen (DE)**
- **Schlögl, Gunter, Dr.**
  **W-6233 Kelkheim (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
**EP-A- 263 963** **EP-A- 0 164 493**
**EP-A- 0 194 588** **EP-A- 0 282 917**

- **"CR-PP Applications for Films and Properties" ; G. Lux ; Speciality Plastics Conference, Zurich, 28-30.11.1988**
- **"Polypropylenes with Controlled Rheology", European Plastic News, June 1986, pp. 30-31**

Bemerkungen:
Die Akte enthält technische Angaben, die nach dem Eingang der Anmeldung eingereicht wurden und die nicht in dieser Patentschrift enthalten sind.

EP 0 481 344 B2

## Beschreibung

Die Erfindung betrifft eine metallisierbare, biaxial orientierte Polyolefin-Mehrschichtfolie aus mindestens einer Basisschicht, die von beiden Seiten von Oberflächenschichten umgeben ist. Die Mehrschichtfolie zeichnet sich durch eine niedrige Trübung, einen hohen Oberflächenglanz, die einseitig niedrige Siegelanspringtemperatur, eine hohe Kratzfestigkeit, eine gute Metallhaftung sowie durch eine niedrige Wasserdampfdurchlässigkeit nach der Metallisierung aus. Die Erfindung betrifft ferner ein Verfahren zur Herstellung der Folie und ihre Verwendung.

Die EP-A-0 194 588 beschreibt eine Polyolefinfolie aus einer Polypropylen-Basisschicht mit beidseitig aufgebrachten Siegelschichten. Eine der beiden Siegelschichten enthält 0,5 bis 3 Gew.-% Polydialkylsiloxan inkorporiert. Diese Schicht A ist nicht coronabehandelt. Die andere Siegelschicht B ist coronabehandelt und enthält kein inkorporiertes Polydialkylsiloxan. Das Siloxan der nicht coronabehandelten Schicht A wird bei Kontakt der beiden Folienoberflächen, z. B. beim Aufwickeln, von der siloxanhaltigen Siegelschicht A auf die Oberfläche der anderen Siegelschicht B übertragen. Diese Schicht B weist auf ihrer äußeren Oberfläche dadurch eine relative Siloxanbelegung von höchstens 15 auf (bestimmt mittels ESCA-Spektroskopie).

In der EP-A-O 023 389 wird eine coextrudierte Mehrschichtfolie für die Metallisieranwendung beschrieben, die aus einer Kernschicht aus im wesentlichen Polypropylen besteht, die beidseitig Deckschichten aus einem Ethylen-Olefincopolymerisat besitzt, wobei der Ethylengehalt 85 bis 99,75 Gew.-% beträgt und das Molekül des Alpha-Olefins 3 bis 6 Kohlenstoffatome enthält. Diese Folie weist die Nachteile auf, daß sie eine hohe Siegelanspringtemperatur besitzt. Außerdem sind ihr Oberflächenglanz und ihre Trübung unbefriedigend und ihre Kratzfestigkeit noch verbesserungswürdig.

In der EP-A-O 282 917 wird eine metallisierbare, siegelbare, coextrudierte Mehrschichtfolie beschrieben, die aus einer Basisschicht im wesentlichen aus Polypropylen und zwei polyolefinischen Deckschichten besteht, wobei alle Schichten ein gefälltes Calciumcarbonat als Neutralisationsmittel und einen Stabilisator gegen thermischen Abbau enthalten.

In der EP-A-O 021 672 wird weiterhin ein durch Coextrusion hergestelltes Laminat beschrieben, bestehend aus einer Polypropylenkernschicht und einem Ethylen-Propylen-Copolymerisat auf wenigstens einer Außenseite der Kernschicht. Die Außenschicht enthält 2 bis 4 Gew.-% Ethylen, wobei Außenschichten mit 2,5 bis 3,5 Gew.-% Ethylen besonders bevorzugt sind. Durch das Weglassen von Gleitmitteln, insbesondere von Fettsäureamiden, in der Folie wird eine gute Haftung zwischen der Außenschicht und einer aufgebrachten Metallschicht erreicht.

In der DE-A-37 01 307 werden siegelbare Mehrschichtfolien für die Metallisieranwendung beschrieben, deren metallisierbare Oberflächenschicht aus Polypropylen besteht.

Die vorliegende Erfindung hat sich die Aufgabe gestellt, eine metallisierbare, transparente polyolefinische Mehrschichtfolie zu schaffen, die einseitig eine niedrige Siegelanspringtemperatur aufweist und sich durch eine niedrige Trübung, einen hohen Oberflächenglanz, eine hohe Kratzfestigkeit, eine gute Metallhaftung und eine niedrige Wasserdampfdurchlässigkeit nach der Metallisierung auszeichnet.

Diese Aufgabe wird erfindungsgemäß durch eine Polyolefin-Mehrschichtfolie der eingangs genannten Gattung gelöst, deren kennzeichnende Merkmale darin bestehen, daß die Basisschicht ein peroxidisch abgebautes Propylenhomopolymerisat und ein Antistatikum enthält und wobei der Abbaufaktor des peroxidisch abgebauten Propylenhomopolymerisats im Bereich von 3 bis 10 liegt und dieser Abbaufaktor definiert ist als

$$A = \frac{S_{G(PP)}}{S_{P(PP)}}$$

worin

$S_{G(PP)}$ der Schmelzindex des abgebauten Propylenhomopolymer-Granulats ist und
$S_{P(PP)}$ der Schmelzindex des Propylenhomopolymer-Ausgangspulvers ist und bei kleiner 1,5 g/10 min liegt, und

die jeweiligen Schmelzindices nach DIN 53 735 bei 21,6 N und 230 °C bestimmt werden und eine Oberflächenschicht der Mehrschichtfolie niedrig siegelnd ist und ein Ethylen-Propylen-Butylen-Terpolymeres und ein Propylen-Butylen-Copolymeres enthält und die andere Oberflächenschicht metallisierbar und coronabehandelt ist und eine Dicke von größer 0,5 µm aufweist.

Weitere bevorzugte Ausführungsformen weisen die in den Unteransprüchen angegebenen Merkmale auf, die darin zu sehen sind,

a) daß die Basisschicht der polyolefinischen Mehrschichtfolie aus einem Polypropylenhomopolymerisat besteht, das peroxidisch abgebaut ist, wobei sein Abbaufaktor A im Bereich von 3 bis 10 liegt. Um bestimmte Eigenschaften

zu verbessern, ist die Basisschicht mit einem ausgewählten Gehalt an Antistatika ausgerüstet.

b) daß sich die erste polyolefinische, niedrig siegelnde Oberflächenschicht aus einem Olefinharzgemisch, bestehend aus einem Ethylen-Propylen-Butylen-Terpolymeren und einem Propylen-Butylen-Copolymeren entsprechend einem Gesamtgehalt in der Oberflächenschicht von 0,1 - 7 Gew.-% Ethylen, 53 - 88,9 Gew.-% Propylen und 10 - 40 Gew.-% Butylen, zusammensetzt. Um bestimmte Eigenschaften der erfindungsgemäßen Polyolefinfolie zu verbessern, enthält die niedrig siegelnde Oberflächenschicht ein grobkörniges Antiblockmittel.

c) daß die zweite polyolefinsiche metallisierbare Oberflächenschicht aus einem statistischen Propylen-Ethylen-Copolymeren besteht, das einen Ethylengehalt von 2,0 - 7,0 Gew.-%, einen Verteilungsfaktor $V_F$ von größer 8 und eine Thermooxidationstemperatur $T_{OX}$ von größer 230 °C besitzt. Die Oberflächenschicht enthält ein Antiblockmittel.

d) Die Dicke der Oberflächenschicht aus dem statistischen Ethylen-Propylen-Copolymeren liegt erfindungsgemäß bei größer 0,5 µm, vorzugsweise bei 0,8 µm bis 1,3 µm. Diese Oberflächenschicht wird coronabehandelt, wobei die Oberflächenspannung direkt nach der Herstellung bei größer 37 mN/m, vorzugsweise zwischen 38 und 41 mN/m liegt.

e) Die niedrigsiegelnde Oberflächenschicht hat eine Dicke von 0,4 µm - 1,0 µm.

Die Basisschicht und die Deckschichten können zusätzlich überliche Additive, wie z. B. Stabilisatoren enthalten.

Die Basischicht besteht aus einem peroxidisch abgebauten Propylenpolymeren, daß zum überwiegenden Teil aus Propylen besteht und einen Schmelzpunkt im Bereich von 162 bis 168 °C besitzt. Isotaktisches Polypropylen mit einem n-heptanlöslichen Anteil von 6 Gew.-% und weniger stellt ein bevorzugtes Propylenpolymeres dar. Um die geforderte gute Optik zu erreichen, hat das peroxidisch abgebaute Polypropylenhomopolymerisat einen Abbaufaktor A von 3 bis 10, vorzugsweise von 4 bis 8. Der Schmelzindex des Polypropylen-Ausgangspulvers liegt bei kleiner 1,5 g/10 min, vorzugsweise bei 0,2 bis 0,9 g/10 min (Messung DIN 53 735, 21,6 H Belastung und 230 °C). Das Polypropylen-Ausgangspulver wird durch Zusatz von organischen Peroxiden [z. B. Dialkylperoxide wie 2,5 Dimethyl-2,5 di (t-butylperoxy)-hexan oder Di-t-butylperoxid] beim Extrudieren auf einen Granulat-Schmelzindex von 2 bis 5,5 g/10 min (Messung DIN 53 735, 21,6 H Belastung und 230 °C) abgebaut. Der Abbaufaktor A des Polypropylenhomopolymerisates ist definiert als

$$A=\frac{S_{G(PP)}}{S_{P(PP)}}$$

mit $S_{G(PP)}$ = Schmelzindex des abgebauten PP-Granulates (PP = Polypropylen) und $S_{P(PP)}$ = Schmelzindex des PP-Ausgangspulvers, wobei der Schmelzindex nach DIN 53 735 (21,6 N Belastung, 230 °C) gemessen wird.

Der peroxidische Abbau bzw. peroxidisch abgebaute oder CR ("controlled rheology") Polypropylen-Homopolymere als solche sind in der Literatur bekannt (vgl. Plastverarbeiter, 38. Jahrgang, 1987, Nr. 4; Polymer Engineering and Science, März 1989, Vol. 29, No. 6; Plastverarbeiter, 36. Jahrgang, 1985, Nr. 11). Derartige peroxidisch abgebaute Polypropylen-Homopolymere kommen insbesondere bei der Spritzgußtechnik und der Faserherstellung zum Einsatz. Wie groß der Abbaufaktor bei diesen Produkten ist, wird aber nicht beschrieben.

Überraschenderweise hat sich gezeigt, daß Polypropylenfolien der eingangs beschriebenen Art insbesondere dann die gestellten Anforderungen gut erfüllen, wenn der Abbaufaktor des Polypropylenhomopolymeren der Basisschicht in engen Grenzen eingehalten wird.

Liegt der Abbaufaktor des Polypropylenhomopolymerisates unter 3, verschlechtern sich die optischen Eigenschaften (deutliche Erhöhung der Folientrübung, Erniedrigung des Oberflächenglanzes). Liegt der Abbaufaktor über 10 treten Probleme bei der Verstreckung auf, was sich äußerst negativ auf die Laufsicherheit bei der Folienproduktion auswirkt. Bei einem Abbaufaktor über 10 ist das Polypropylenhomopolymere nur noch in einem sehr engen Temperaturbereich oder gar nicht mehr verstreckbar.

Überraschenderweise hat sich auch gezeigt, daß die Eigenschaften der Folie verbessert werden, wenn das Polypropylen der Basisschicht mit einer ausgewählten Menge an Antistatikum ausgerüstet wird.

Enthält die Basisschicht kein Antistatikum, so besitzt die Folie einen sehr hohen elektrischen Oberflä` chenwiderstand. Die Folie neigt sehr stark zur elektrostatischen Aufladung und zieht Staub an. Bei der späteren Metallisierung werden die an der Folienoberfläche haftenden Staubpartikel nur unzureichend oder nicht metallisiert, wodurch sich die Wasserdampfdurchlässigkeit der metallisierten Folie deutlich erhöht (d. h. die Barriereeigenschaft bzw. die Sperrwirkung geht verloren).

Enthält die Basisschicht zu viel Antistatikum oder sind die Deckschichten mit Antistatikum ausgerüstet so ist die Haftung zwischen Folie und aufgebrachter Metallschicht schlecht. Als Ergebnis mehrerer Versuche hat sich gezeigt, daß der Antistatikumgehalt der Basisschicht zwischen 0,02 Gew.% und 0,1 Gew.-% liegen sollte, und daß die Siegelschichten (Deckschichten) nicht mit Antistatikum, ausgerüstet sein sollten.

Bevorzugte Antistatika sind Alkali-alkansulfonate, polyethermodifizierte, d.h. ethoxylierte und/oder propoxylierte

Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen und mit 2 ω-Hydroxyl-($C_1$-$C_4$)-alkyl-Gruppen, worunter N,N'-bis-(2-hydroxyethyl)-alkylamine mit 10-20 vorzugsweise 12-18 Kohlenstoffatomen im Alkylteil besonders geeignet sind.

Die erste polyolefinsiche, niedrig siegelnde Oberflächenschicht der erfindungsgemäßen Mehrschichtfolie besteht aus einer Olefinharzzusammensetzung, bestehend aus einem Ehtylen-Propylen-Butylen-Terpolymeren und einem Propylen-Butylen-Copolymeren entsprechend einem Gesamtgehalt in der Oberflächenschicht von 0,1 bis 7 Gew.-% Ethylen, 53 bis 89,9 Gew.-% Propylen und 10 bis 40 Gew.-% Butylen, bezogen auf die Olefinharzzusammensetzung.

Diese Olefinharzzusammensetzung hat einen bei 20 °C p-xylollöslichen Anteil von 25 bis 70 Gew.-%, bevorzugt von 40 bis 60 Gew.-%. Der Schmelzpunkt der Olefinharzzusammensetzung liegt bei 120 °C oder höher. Die Olefinharzzusammensetzung hat einen Schmelzflußindex von 1 bis 16 g/10 min bei 230 °C und 2,16 kp Belastung (DIN 53 735), insbesondere von 4 bis 10 g/10 min bei 230 °C und 2,16 kp Belastung.

Als besonders geeignet hat sich das Copolymere aus α-Olefnen erwiesen, welches von Mitsui Petrochemical Industries, Ltd. unter dem Namen (R)Tafmer XR-107 L vertrieben wird.

Erfindungsgemäß enthält die niedrig siegelnde Deckschicht ein Antiblockmittel.

Geeignete Antiblockmittel für diese Schicht sind anorganische Zusatzstoffe wie Siliziumdioxid, Calciumkarbonat, Magnesiumsilikat und/oder Antiblockmittel wie z. B. Polyamide, Polyester sowie insbesondere Benzoguanamin-Formaldehyd-Copolymere und dergleichen. Wesentlich für das Antiblockmittel ist, daß die mittlere Teilchengröße zwischen 1 und 6 μm, vorzugsweise zwischen 2 und 5 μm liegt. Siliziumdioxid und Calciumkarbonat sind als Antiblockmittel bevorzugt.

Besonders bevorzugt werden diese Mittel eingesetzt, wenn sie kugelförmige Gestalt besitzen. Derartige kugelförmige anorganische Materialien und deren Zusatz zu Folien aus thermoplastischen Kunststoffen werden z. B. in der EP-A-0 236 945 und der DE-A-38 01 535 beschrieben. Die Zusatzmenge an Antiblockmittel beträgt 0,1 bis 2 Gew.-%, vorzugsweise 0,1 bis 0,5 Gew.-%, bezogen auf das Gesamtgewicht der ersten polyolefinischen niedrig siegelnden Oberflächenschicht.

Die Schichtdicke der niedrig siegelnden Oberflächenschicht liegt vorzugsweise zwischen 0,4 und 1,0 μm. Liegt die Schichtdicke unter 0,4 μm verschlechtem sich die Siegeleigenschaften (Erhöhung der Siegelanspringtemperatur, Erniedrigung der Siegelnahtfestigkeit). Bei Schichtdicken von größer 1,0 μm verschlechtern sich die Folienoptik (Erhöhung der Trübung) und das Verarbeitungsverhalten.

Die zweite polyolefinische, metallisierbare Oberflächenschicht besteht aus einem statistischen Ethylen-Propylen-Copolymeren, das einen Ethylengehalt von 2,0 - 7,0 Gew.-%, einen Verteilungsfaktor $V_F$ von größer 8 und eine Thermooxydationstemperatur $T_{OX}$ von größer 230 °C besitzt.

Der Ethylengehalt und der Verteilungsfaktor des Copolymeren werden mit Hilfe der $C_{13}$-NMR-Spektroskopie bestimmt. Die Messungen wurden mit einem Kernresonanzspektrometer der Firma Bruker, Modell HX-270 (Deutschland), das mit einem Rechner der Firma Bruker, TYP Bruker Aspect 2000 ausgerüstet war, durchgeführt.

Das zu charakterisierende Ethylen-Propylen-Copolymere wird in einem Lösungsmittelgemisch aus 65 Vol-% Hexachlorbenzol und 35 Vol-% 1,1-Dideuterotetrachlorethan gelöst. so daß eine 10 Gew.-%-Lösung entsteht. Als Bezugsstandard wurde Octamethyltetrasiloxan (OMTS) zugegeben. Das 67,9-MHZ-$C_{13}$-Kernresonanzspektrum wurde bei 130 °C gemessen. Die Auswertung der Spektren erfolgte nach der in J.C. Randall, Polymer Sequence Distribution (Academic Press, New York, 1977) beschriebenen Vorgehensweise.

Der Verteilungsfaktor ist definiert als

$$V_F = \frac{C_i}{C_G - C_i}$$

wobei $C_G$ den Gesamtgehalt an Ethylen im Copolymerisat in Gew.-% bedeutet und $C_i$ den Anteil an Ethylen in Gew.-%, der als isolierter Ethylenanteil vorliegt, d. h. ein einzelner Ethylenbaustein befindet sich in der nachfolgend skizzierten Art isoliert zwischen zwei Propylenbausteinen:

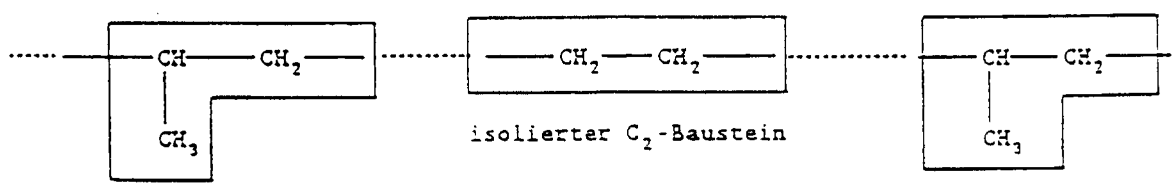

Die Bestimmung der idealisierten Thermooxidationstemperatur $T_{OX}$ erfolgt auf folgende Weise: 2 bis 5 mg des zu untersuchenden Rohstoffs werden in einem Differentialkalorimeter mit einer Heizrate von 20 K/min aufgeheizt. Als Spülgas wird Luft verwendet, die Ausgangstemperatur ist 295 K. Bei der Messung wird die Veränderung des Wärmeflusses mit ansteigender Temperatur dargestellt. Während diese Kurve nach dem Schmelzen des Rohstoffs zunächst nahezu waagerecht verläuft (Basislinie), steigen diese Werte infolge Oxidation ab einer bestimmten Temperatur stark an (exothermer Ast).

Die idealisierte Thermooxidationstemperatur wird als Schnittpunkt der den exothermen Ast des Thermogramms verlängernden Geraden mit der Basislinie definiert.

Überraschenderweise hat sich gezeigt, daß zweckmäßigerweise die genannten Parameter für das Propylen-Ethylen-Copolymere der zweiten polyolefinischen metallisierbaren Oberflächenschicht der erfindungsgemäßen Folie in sehr engen Grenzen eingehalten werden sollten, um alle in der Aufgabenstellung genannten Eigenschaften gleichzeitig optimal zu realisieren. Der Ethylengehalt und der Verteilungsfaktor $V_F$ des Copolymeren sind für die Oberflächenbehandelbarkeit mittels elektrischer Coronaentladung, für die Langzeitmetallisierbarkeit sowie für die optischen Eigenschaften von Bedeutung. Liegt der Ethylengehalt unter 2,0 Gew.-%, ist die Coronabehandelbarkeit reduziert sowie das Abklingverhalten der Behandlungswirkung ungünstig. Liegt der Ethylengehalt über 7,0 Gew.-% oder der Verteilungsfaktor unter 8, so verschlechtern sich die optischen Eigenschaften, insbesondere der Oberflächenglanz.

Die Thermooxidationstemperatur ist für die Metallhaftung von besonderer Bedeutung. Liegt die Thermooxidationstemperatur der metallisierbaren Deckschicht unter 230 °C, so bilden sich aufgrund der Coronabehandlung Abbauprodukte in dem Maße auf der Oberfläche, daß die Haftung einer folgenden Metallisierung verschlechtert wird.

Es hat sich als vorteilhaft erwiesen, wenn die zweite polyolefinsiche, metallisierbare Oberflächenschicht weder ein Gleitmittel noch ein Antistatikum enthält, sondern lediglich ein Antiblockmittel. Siliziumdioxid und Calciumkarbonat sind als Antiblockmittel besonders bevorzugt. Wesentlich für das anorganische Antiblockmittel ist, daß die mittlere Teilchengröße vorzugsweise zwischen 2 und 5 $\mu m$ liegt.

Ist die mittlere Teilchengröße kleiner 2 $\mu m$, neigt die Folie zur Verblockung, was sich auf das Verarbeitungsverhalten negativ auswirkt. Außerdem zeigt die Folie eine hohe Kratzempfindlichkeit. Liegt die mittlere Teilchengröße über 5 $\mu m$, so läßt sich das Antiblockmittel sehr schlecht in die Polymermatrix einbetten, was zu einer fehlerhaften Metallisierung und zu einer Erhöhung der Wasserdampfdurchlässigkeit der metallisierten Folie führt. Enthält die metallisierbare Oberflächenschicht ein Gleitmittel oder ein Antistatikum, so ist die Haftung zwischen Deckschicht und aufgebrachter Metallschicht verringert.

Die Dicke der zweiten polyolefinsichen, metallisierbaren Oberflächen beträgt erfindungsgemäß größer 0,5 $\mu m$, vorzugsweise 0,8 $\mu m$ bis 1,3 $\mu m$. Diese Oberflächenschicht wird coronabehandelt, wobei die Oberflächenspannung direkt nach der Herstellung einen Wert von größer 37 mN/m, vorzugsweise von 38 bis 41 mN/m aufweist. Bei Schichtdicken von kleiner 0,5 $\mu m$ ist die Coronabehandelbarkeit schlechter und das Abklingverhalten der Behandlungswirkung ungünstig. Bei Schichtdicken von größer 1,3 $\mu m$ zeigt die Mehrsichtfolie verringerte optische Eigenschaften. Liegt die Oberflächenspannung der behandelten Schicht unter 37 mN/m läßt sich die Folie nur noch schlecht metallisieren. Außerdem ist die Haftung zwischen Deckschicht und aufgebrachter Metallschicht unzureichend. Bei einer Vorbehandlungsintensität von größer 41 mN/m bilden sich aufgrund der starken Coronabehandlung Abbauprodukte auf der Oberfläche, die sich negativ auf die Haftung einer folgenden Metallisierung auswirken.

Die Olefinharzzusammensetzung der ersten polyolefinischen, niedrig siegelnden Oberflächenschicht und das Ethylen-Propylen-Copolymere der zweiten metallisierbaren Oberflächenschicht besitzen einen niedrigeren Schmelzpunkt als das peroxidisch abgebaute Propylenpolymere der Basisschicht. Der Schmelzpunkt beider Deckschichtrohstoffe liegt im allgemeinen im Bereich von 80 bis 150 °C. Der Schmelzflußindex beider Deckschichtrohstoffe liegt höher als der des Polypropylenhomopolymeren der Basisschicht. Der Schmelzflußindex der Olefinharzzusammensetzung und der Schmelzflußindex des Copolymeren beträgt im allgemeinen 3 bis 15 g/10 min, vorzugsweise 4 bis 10 g/10 min, bei 230 °C und 2,16 kg Belastung (DIN 53 735).

Die Basisschicht, die erste niedrig siegelnde und zweite metallisierbare Oberflächenschicht enthalten vorzugsweise einen phenolischen Stabilisator mit einer Molmasse von mehr als 500 g/mol. Als Stabilisator eignen sich besonders Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol. Die Zusatzmenge beträgt 0,1 bis 0,6 Gew.-%, vorzugsweise 0,15 bis 0,3 Gew.-%. Zur Neutralisation der Katalysatorreste des Basisrohstoffes und der beiden Deckschichtrohstoffe wird vorzugsweise Calciumstearat und/oder Calciumkarbonat einer mittleren Teilchengröße von bevorzugt höchstens 0,07 mm, einer absoluten Teilchengröße von kleiner 5 $\mu m$ und einer spezifischen Oberfläche von mindestens 40 $m^2/g$ eingesetzt. Die Zusatzmenge beträgt 0,01 bis 0,05 Gew.-%.

Die Gesamtdicke der erfindungsgemäßen Mehrschichtfolie liegt zwischen 10 und 70 $\mu m$, vorzugsweise zwischen 10 und 50 $\mu m$.

Die Herstellung der erfindungsgemäßen aus drei Schichten gebildeten Polyolefinfolie erfolgt nach dem bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die durch Coextrusion erhaltene Folie zur Verfestigung abgekühlt wird, die Folie biaxial gestreckt (orientiert), die biaxial gestreckte Folie thermofixiert und an der zur Coronabehandlung vorgesehenen metallisierbaren Oberflächenschicht coronabehandelt wird. Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist. Zunächst wird also wie beim üblichen Coextrusionsverfahren das Polymere oder die Polymermischung der einzelnen Schichten in einem Extruder komprimiert oder verflüssigt. Die Schmelzen werden dann gleichzeitig durch eine Flachdüse (Breitschlitzdüse) gepreßt, und die ausgepreßte mehrschichtige Folie wird auf einer oder mehreren Walzen, die durch Kühlung auf etwa 30 bis 50 °C gehalten werden, abgekühlt und verfestigt. Die so erhaltene Folie wird dann längs und quer zur Extrusionsrichtung gestreckt, was zu einer Orientierung der Molekülketten führt. In Längsrichtung wird vorzugsweise 4 bis 7:1 und in Querrichtung vorzugsweise 8 bis 10 : 1 gestreckt. Die Längsstreckung wird bei einer Folientemperatur von vorzugsweise 120 bis 140 °C durchgeführt und die Querstreckung vorzugsweise bei 160 bis 175 °C. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. An die biaxiale Streckung der Folie schließt sich ihre Thermofixierung (Wärmebehandlung) an. Dabei wird die Folie etwa 0,5 bis 10 s lang bei einer Temperatur von 150 bis 160 °C gehalten. Die Coronabehandlung erfolgt vorzugsweise mit einer Wechselspannung von etwa 10.000 V und 10.000 Hz. Die so hergestellte Folie wird in üblicher Weise mit Hilfe einer Aufwickeleinrichtung aufgewickelt.

Die erfindungsgemäße Polyolefin-Mehrschichtfolie eignet sich insbesondere für die Metallisieranwendung. Sie besitzt all die wichtigen Eigenschaften, die von Polyolefinfolien im Hinblick auf den Einsatz als niedrig siegelnde Metallisierfolie gefordert werden.

Sie weist insbesondere auf:

- eine minimale Siegelanspringtemperatur der ersten polyolefinischen Oberflächenschicht von kleiner 90 °C,
- sehr niedrige Trübung und eine homogene Folienoptik,
- hohen Oberflächenglanz der ersten nicht metallisierbaren und derzweiten metallisierbaren Oberflächenschicht,
- hohe Kratzfestigkeit beider Oberflächenschichten.
- gute Oberflächenbehandelbarkeit
- gute Sofort- und Langzeitmetallisierbarkeitseigenschaften,
- gute Metallhaftung
- niedrige Wasserdampfdurchlässigkeit nach der Metallisierung
- gute Weiterverarbeitungseigenschaften

Die bei der Metallisierung auf die zweite polyolefinische Obenflächenschicht aufgebrachte Metallschicht kann aus jedem geeigneten Metall bestehen. Bevorzugt sind Schichten aus Aluminium, Zink, Gold oder Silber oder aus entsprechenden Legierungen, wobei Aluminium oder aluminiumhaltige Legierungen besonders bevorzugt sind. Als geeignete Metallisierungsverfahren seien die Elektroplattierung, das Besputtern und die Vakuumbedampfung genannt, wobei die Vakuumbedampfung bevorzugt ist.

Die Dicke der Metallschicht beträgt etwa 20 bis 600 nm, vorzugsweise 25 bis 100 nm.

Metalliserte Folien finden zunehmend für Verpackungszwecke, insbesondere von Lebensmitteln, Verwendung. Insbesondere werden durch eine auf der Kunststoffolie aufgebrachte Metallschicht die Sauerstoffdurchlässigkeit und die Wasserdampfdurchlässigkeit erniedrigt, während die Steifigkeit und die Maschinengängigkeit allgemein erhöht werden und die Lichtdichte einen Höchstwert erreicht. In der Zeitschrit "Neue Verpackung", Heft 9, Seite 1048, 1. und 3. Spalte, aus dem Jahre 1983 wird darauf hingewiesen, daß die guten Sperreigenschaften von metallisierten Kunststoffolien nur dann dauerhaft sind, wenn die aufgebrachte Metallisierung einerseits hervorragend haftet, andererseits aber darauf geachtet wird, daß die Metallschicht nicht beschädigt wird, insbesondere durch Strecken, Biegen, Zerkratzen oder Knittern. Die erfindungsgemäße metallisierbare mehrschichtige Folie eignet sich daher wegen der hervorragenden Hafteigenschaften der in besonders hohem Maße ebenen, hochglänzenden metallisierbaren Deckschicht auch zu diesem Zwecke.

Die Metallschicht auf der erfindungsgemäßen Mehrschichtfolie kann durch Aufkaschieren einer Polyethylenfolie vor mechanischer Beschädigung geschützt werden. Dünne Polyethylenschichten können auch durch eine Extrusionsbeschichtung aufgetragen werden. Die erfindungsgemäße metallisierbare Folie kann in hervorragender Weise zur Herstellung von Verbunden mit anderen Folien (oPP, PET, usw.) bzw. Papier eingesetzt werden.

Die erfindungsgemäße, einseitig niedrig siegelnde Mehrschichtfolie eignet sich nach der Metallisierung insbesondere zur Herstellung von Verbunden mit einer anderen niedrigsiegelnden oder einseitig niedrig siegelnden biaxial orientierten Polyolefinfolie, so daß ein beidseitig niedrig siegelnder Verbund resultiert.

Die Erfindung wird nun anhand von Ausführungsbeispielen noch näher erläutert.

In den nachstehenden Beispielen und Vergleichsbeispielen handelt es sich jeweils um biaxial orientierte (Längsstreckverhältnis 5:1, Querstreckverhältnis 10:1) Polyolefinfolien mit einer Basisschicht und zwei Deckschichten, wobei

die Basisschicht jeweils aus einem isotaktischen Polypropylen mit einem n-heptanlöslichen Anteil von 4 Gew.-%, mit einem Schmelzpunkt von 165 °C und einem Schmelzflußindex von 3,5 g/10 min bei 230 °C und 2,16 kg Belastung (DIN 53 735) als Hauptkomponente besteht. Die Basisschicht ist jeweils etwa 18 µm dick. Die Dicke der beiden Deckschichten, die die Basisschicht umgeben, wird jeweils in den einzelnen Beispielen und Vergleichsbeispielen angegeben. Die dreischichtigen Polyolefinfolien sind nach dem bekannten Coextrusionsverfahren hergestellt worden.

Alle Schichten enthalten zur Stabilisierung 0,15 Gew.-% Pentaerythrityl-Tetrakis-3-(3,5-ditertiärbutyl-4-hydroxyphenyl)-propionat ((R)Irganox 1010).

Beispiel 1:

Das (isotaktische) Polypropylen-Homopolymerisat der Basisschicht wird von einem Polypropylen-Ausgangspulver mit einem Schmelzindex $S_{P(PP)}$ von 0,7 g/10 min (bestimmt nach DIN 53735 bei 21,6 N Belastung und 230 °C) durch Zusatz von Di-t-butylperoxid auf einen Granulatschmelzindex $S_{G(PP)}$ von 3,5 g/10 min (DIN 53735 bei 21,6 N Belastung und 230 °C) abgebaut, woraus sich ein Abbaufaktor A von 5 ergibt.

Die Basisschicht enthält 0,05 Gew.-% N,N'-bis-(2-hydroxyethyl)-($C_{10}$-$C_{20}$)-alkylamin als Antistatikum.

Die erste polyolefinsiche, niedrig siegelnde Deckschicht besteht aus einer Olefinharzzusammensetzung, die sich aus

$a_1$) 50 Gew.-% eines Ethylen-Propylen-Butylen-Terpolymeren, bestehend aus 1,4 Gew.-% Ethylen, 2,8 Gew.-% Butylen und 95,8 Gew.-% Propylen (jeweils bezogen auf das Terpolymere) sowie

$a_2$) 50 Gew.-% eines Propylen-Butylen-Copolymeren, bestehend aus 66,8 Gew.-% Propylen und 33,2 Gew.-% Butylen (bezogen jeweils auf das Copolymere), zusammensetzt (es handelt sich um TAFMER XR 107 L), was einem Gesamtgehalt ($a_1$ + $a_2$) von 0,7 Gew.-% Ethylen, 81,3 Gew.-% Propylen und 18 Gew.-% Butylen, bezogen auf das TAFMER XR 107 L, entspricht. Die Olefinharzzusammensetzung $a_1$ + $a_2$ besitzt einen Schmelzflußindex von 8 g/10 min (DIN 53735 bei 21,6 N Belastung und 230 °C) und einen Schmelzpunkt von 142 °C.

Die Olefinharzzusammensetzung enthält 0,2 Gew.-% Siliciumdioxid mit einem mittleren Teilchendurchmesser von 4,0 µm. Die Dicke der niedrig siegelnden Schicht liegt bei 0,8 µm.

Die zweite polyolefinische, metallisierbare Deckschicht besteht aus einem statistischen Copolymerisat aus Ethylen- und Propylenbausteinen mit einem Ethylengehalt von 4,5 Gew.-% und einem Propylengehalt von 95,5 Gew.-%. Das Copolymerisat ist mit 0,33 Gew.-% Siliciumdioxid mit einem mittleren Teilchendurchmesser von 2,0 µm ausgerüstet. Das Ethylen-Propylen-Copolymere besitzt folgende Eigenschaften:

- Verteilungsfaktor : $V_F$ = 17
- idealisierte Thermooxydationstemperatur : 256 °C
- Schmelzflußindex : 6,0 g/10 min (DIN 53735)
- Schmelzpunkt: 135 °C

Die Dicke der metalliserbaren Oberflächenschicht liegt bei 1,0 µm. Die Coronabehandlung der metallisierbaren Oberflächenschicht erfolgt mit einer Wechselspannung von etwa 10.000 Volt und 10.000 Hz. Die Mehrschichtfolie besitzt direkt nach der Herstellung auf der behandelten Seite eine Oberflächenspannung von 39 - 40 mN/m.

Beispiel 2:

Beispiel 1 wird wiederholt.

Das (isotaktische) Polypropylen-Homopolymerisat der Basisschicht wird von einem Polypropylen-Ausgangspulver mit einem Schmelzindex $S_{P(PP)}$ von 0,5 g/10 min (bestimmt nach DIN 53735 bei 21,6 N Belastung und 230 °C) durch Zusatz von Di-t-butylperoxid auf einen Granulatschmelzindex $S_{G(PP)}$ von 3,5 g/10 min (DIN 53735 bei 21,6 N Belastung und 230 °C) abgebaut, woraus sich ein Abbaufaktor A von 7 ergibt.

Die Basisschicht enthält 0,08 Gew.-% N,N'-bis-(2-hydroxyethyl)-($C_{10}$-$C_{20}$)-alkylamin als Antistatikum.

Die Dicke der ersten polyolefinischen, niedrig siegelnden Oberflächenschicht liegt bei 0,6 µm.

Die Dicke der zweiten polyolefinischen, metallisierbaren Oberflächenschicht liegt bei 1,2 µm.

Vergleichsbeispiel 1:

Es wird eine Dreischichtfolie hergestellt wie in Beispiel 1. Das Polypropylenpolymere der Basisschicht besitzt wie in Beispiel 1 einen Granulatschmelzindex von 3,5 g/10 min (DIN 53 735 bei 21,6 °C). Das Homopolymerisat der Basisschicht ist jedoch nicht peroxidisch abgebaut und enthält kein Antistatikum. Die erste niedrig siegelnde Oberflächenschicht entspricht in der Zusammensetzung und der Dicke derjenigen aus Beispiel 1.

Die zweite metallisierbare Deckschicht entspricht derjenigen aus Beispiel 1. Die Schichtdicke liegt jedoch bei 0,6 µm.

Vergleichsbeispiel 2:

Es wird eine Mehrschichtfolie hergestellt wie in Beispiel 1. Das Polypropylenpolymere der Basisschicht ist jedoch nicht peroxidisch abgebaut und enthält 0,2 Gew.-% N,N'-bis (2-hydroxyethyl)-($C_{10}$-$C_{20}$)-alkylamin als Antistatikum. Die erste niedrig siegelnde Oberflächenschicht entspricht derjenigen aus Beispiel 1. Die zweite metallisierbare Deckschicht entspricht derjenigen aus Beispiel 1, die Schichtdicke liegt jedoch bei 0,6 µm.

Vergleichsbeispiel 3:

Es wird eine Mehrschichtfolie hergestellt wie in Beispiel 1. Das Polypropylen-Homopolymerisat enthält wie in Beispiel 1 0,05 Gew.-% Antistatikum. Das Polypropylenpolymere ist jedoch nicht peroxidisch abgebaut.

Die erste niedrig siegelnde Oberflächenschicht ist identisch mit derjenigen aus Beispiel 1. Die zweite metallisierbare Deckschicht besteht aus Ethylen-Propylen-Copolymeren mit einem Ethylengehalt von 1,8 Gew.-% und einen Propylengehalt von 98,2 Gew.-%. Das Copolymerisat enthält 0,15 Gew.-% N,N'-bis-(2-hydroxyethyl)-($C_{10}$-$C_{20}$)-alkylamin als Antistatikum und kein Siliciumdioxid.

Das Copolymere hat folgende Eigenschaften:

- Verteilungsfaktor: 14
- idealisierte Thermooxidationstemperatur: 230 °C
- Schmelzflußindex: 5,5 g/10 min (DIN 53 735)
- Schmelzpunkt: 142 °C

Die Schichtdicke liegt wie in Beispiel 1 bei 1,0 µm.

Vergleichsbeispiel 4:

Es wird eine Mehrschichtfolie hergestellt wie in Beispiel 1. Das Propylenpolymere der Basisschicht ist nicht peroxidisch abgebaut und enthält wie in Beispiel 1 0,05 Gew.-% Antistatikum.

Die erste polyolefinische Oberflächenschicht besteht aus einem Ethylen-Propylen-Copolymeren mit einem Ethylengehalt von 4,5 Gew.-%, einem Propylengehalt von 95,5 Gew.-%, einen Verteilungsfaktor von $V_F = 17$ und einem Schmelzflußindex von 6,5 g/10 min (DIN 53 735). Die Schichtdicke liegt bei 0,8 µm. Die zweite metallisierbare Oberflächenschicht ist identisch mit derjenigen aus Beispiel 1.

Vergleichsbeispiel 5:

Beispiel 1 der europäischen Patentanmeldung 0282917 wird nachgearbeitet. Die Basisschicht und die metallisierbare Deckschicht bestehen aus einem Polypropylenhomopolymeren, das nicht peroxidisch abgebaut ist und kein Antistatikum enthält. Die erste siegelbare Deckschicht besteht im wesentlichen aus einem Ethylen-Propylen-Copolymeren mit einem Ethylengehalt von 4,5 Gew.-% bezogen auf das Copolymerisat. Alle Schichten sind mit 0,05 Gew.-% eines gefällten Calciumcarbonats und 0,1 Gew.-% eines Stabilisators ausgerüstet. Die metallisierbare Schicht enthält daüber hinaus noch 6 Gew.-% eines vollständig hydrierten Cyclopentadienharzes. Die siegelbare Deckschicht enthält 0,2 Gew.-% des Antiblockmittels (R)Syloid 244. Die Dicke der Deckschichten liegt bei 0,6 µm.

Vergleichsbeispiel 6:

Beispiel 2 der europäischen Patentanmeldung 0282917 wird nachgearbeitet. Die Basisschicht besteht aus einem Polypropylenpolymeren, das nicht peroxidisch abgebaut ist und kein Antistatikum enthält.

Die erste metallisierbare Deckschicht ist 0,6 µm dick und besteht aus einem Ethylen-Propylen-Copolymeren mit einem Ethylengehalt von 4,5 Gew.-%. Die zweite siegelbare Deckschicht besteht aus einem Ehtylen-Propylen-Butylen-Terpolymerisat mit einem Gehalt von 1,4 Gew.-% an Ethylen, 92,2 Gew.-% an Propylen und 6,4 Gew.-% an Butylen, bezogen auf das Terpolymerisat. Diese zweite Schicht enthält 0,3 Gew.-% des Antiblockmittels ASP 900 (R). Alle Schichten sind mit 0,05 Gew.-% eines gefällten Calciumcarbonats und mit 0,1 Gew.-% eines Stabilisators ausgerüstet. Die erste metallisierbare Deckschicht enthält darüber hinaus noch 6 Gew.-% eines vollständig hydrierten Cyclopentadienharzes.

Vergleichsbeispiel 7:

Beispiel 1 der europäischen Patentanmeldung 0023389 wird nachgearbeitet. Die Basisschicht besteht aus einem Polypropylenpolymeren, das nicht peroxidisch abgebaut ist und kein Antistatikum enthält. Die Basisschicht ist von 0,4 µm dicken Deckschichten aus einem Ethylen-Propylen-Copolymeren mit einem Propylengehalt von 3,4 Gew.-% und einem Ehtylengehalt von 96,5 Gew.-% umgeben. Die zu metallisierende Deckschicht wird coronabehandelt.

Zur Charakterisierung der Rohstoffe und der Folien wurden neben den eingangs genannten Methoden folgende Meßmethoden benutzt:

Schmelzflußindex:

DIN 53 735 bei 21,6 N Belastung und 230 °C.

Schmelzpunkt:

DSC-Messung, Maximum der Schmelzkurve, Aufheizgeschwindigkeit 20 °C/min.

Trübung:

Die Trübung der Folie wird in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wird. Die vier Lagen wurden gewählt, da man hierdurch den optimalen Meßbereich ausnutzt. Die Trübungsbewertung erfolgte mit:

≦ 17% = sehr gut (+ +)
≧ 17% bis 20% = gut (+)
≧ 20 % bis 25 % = mäßig (±)
≧ 25.% = schlecht (-)

Glanz:

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20 °C eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden. Die Glanzbewertung (Einstrahlwinkel 20 °C) erfolgt mit:

≧ 115 = sehr gut (+ +)
≦ 115 bis 110 = gut (+)
≦ 110 bis 100 = mäßig (±)
≦ 100 = schlecht (-)

Kratzfestigkeit bzw. Kratzempfindlichkeit:

Die Kratzfestigkeit wird in Anlehnung an DIN 53 754 bestimmt.

Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut (+ +) bezeichnet, wenn die Trübungszunahme kleiner 22 % beträgt, mit gut (+), wenn die Trübungszunahme bei 22 bis 25 % liegt, mit mäßig (±), wenn die Trübungszunahme bei 25 - 30 % liegt und mit schlecht (-) bei Trübungszunahmen von größer 30 %.

Bestimmung der Niederdruck-Siegelnahtfestigkeit:

Zwei 15 mm breite Folienstreifen werden übereinander gelegt und bei 110 °C, einer Siegelzeit von 0,5 s und einem

Siegeldruck von 1,5 N/$cm^2$ (Gerät: Brugger Typ NDS, einseitig beheizte Siegelbacke) versiegelt. Die Siegelnahtfestigkeit wird nach der T-Peel-Methode bestimmt.

Bestimmung der Siegelanspringtemperatur:

Mit dem Siegelgerät HSG/ET der Fa. Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 15 N/$cm^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Bestimmung der Coronabehandlungsintensität:

Die Coronabehandlung wurde so ausgeführt, daß die behandelte Folienoberfläche jeweils eine Behandlungsintensität von 39 - 40 mN/m direkt nach der Behandlung besaß. Die Behandlungsintensität wurde mittels der sogenannten Tintenmethode (DIN 53 364) bestimmt.

Langzeitbehandlungsintensität:

Die Behandlungsintensitätsmessung wurde im Abstand von jeweils 14 Tagen wiederholt. Als sehr gut wurde das Abklingverhalten bezeichnet, wenn die Behandlungsintensität nach vier Monaten noch mindestens 37 mN/m betrug ( $\Delta$ B $\leqq$ 2mN/m). Als schlecht wurde das Abklingverhalten bezeichnet, wenn die Behandlungsintensität kleiner als 35 mN/m betrug ($\Delta$ B $\geqq$ 4mN/m).

Metallhaftung:

Die Folien wurden 14 Tage nach ihrer Produktion (Kurzzeitbeurteilung) bzw. 4 Monate nach ihrer Produktion (Langzeitbeurteilung) mit Aluminium metallisiert. Die Metallhaftung wurde mittels Klebebandtest beurteilt. Konnte mittels Klebeband überhaupt kein Metall abgelöst werden, so wurde die Metallhaftung mit sehr gut bezeichnet. Bei geringer Metallablösung wurde die Metallhaftung mit gut und bei deutlicher Metallablösung mit schlecht beurteilt.

Wasserdampfdurchlässigkeit der metallisierten Folie:

Die Wasserdampfdurchlässigkeit der metallisierten Folie wird gemäß DIN 53 122, Teil 2, bestimmt (Meßbedingungen: 23 °C, 85 % relative Luftfeuchte).

Die Bewertung der Wasserdampfdurchlässigkeit erfolgt mit:

$< 0{,}3$ g/$m^2$ • d = sehr gut (+ +)
0,3 - 0,4 g/$m^2$ • d = gut (+)
0,4 - 0,5 g/$m^2$ • d = mäßig ($\pm$)
$> 0{,}5$ g/$m^2$ • d = schlecht (-)

In der nachfolgenden Tabelle 1 sind die Eigenschaften der polyolefinischen Mehrschichtfolien der Beispiele und der Vergleichsbeispiele zusammengefaßt. Die Überlegenheit der erfindungsgemäßen Folien entsprechend Beispiel 1 und Beispiel 2 geht aus der Tabelle deutlich hervor. Die Vergleichsbeispiele 1 bis 7 zeigen zwar bei einzelnen Punkten teilweise gute Eigenschaften, allerdings kann keine Mehrschichtfolie nach den Vergleichsbeispielen 1 bis 7 alle Anforderungen, d. h. niedrige Folientrübung, hoher Oberflächenglanz, homogene Folienoptik, hohe Kratzfestigkeit, einseitig niedrige Siegelanspringtemperatur, gute Sofort- und Langzeitmetallisierungseigenschaften, gute Metallhaftung sowie niedrige Wasserdampfdurchlässigkeit nach der Metallisierung gleichzeitig erfüllen. Lediglich die erfindungsgemäßen polyolefinischen Mehrschichtfolien aus den Beispielen 1 und 2 erfüllen alle Anforderungen gleichzeitig.

Tabelle 1

| | Trübung 4-lagig [%] | Glanz Meßwinkel 20° | | Kratzfestigkeit [%] | | Siegelspring temperatur (15 $N/cm^2$,0,5s) [°C] 1. Seite | Siegelnaht festigkeit (1,5 $N/cm^2$, 0,5s, 110°C) 1./1. Seite | Metallhaftung | | Wasserdampf,durchlässigkeit (23°C,85 % rel. Luftfeuchte [$g/(m^2 \cdot d)$] |
|---|---|---|---|---|---|---|---|---|---|---|
| | | 1. Seite | 2. Seite | 1. Seite | 2. Seite | | | Kurzzeit | Langzeit | |
| B1 | ++ | ++ | ++ | ++ | ++ | 87 | 2,7 | ++ | ++ | ++ |
| B2 | ++ | ++ | ++ | ++ | ++ | 88 | 2,6 | ++ | ++ | ++ |
| VB1 | ± | + | + | ++ | + | 88 | 2,5 | ++ | + | - |
| VB2 | ± | + | + | ++ | + | 88 | 2,6 | ± | ± | ± |
| VB3 | ± | + | ± | ++ | ± | 87 | 2,6 | ± | - | + |
| VB4 | ± | + | + | ± | ++ | 122 | 0 | ++ | ++ | ++ |
| VB5 | ± | + | ± | + | + | 122 | 0 | ± | - | - |
| VB6 | - | ± | ± | ± | ± | 188 | 0 | ++ | + | - |
| VB7 | - | ± | ± | - | - | > 122 | 0 | + | ± | - |

## Patentansprüche

1. Metallisierbare, biaxial orientierte Polyolefin-Mehrschichtfolie aus mindestens einer Basisschicht, die von beiden Seiten von Oberflächenschichten umgeben ist, dadurch gekennzeichnet, daß die Basisschicht ein peroxidisch abgebautes Propylenhomopolymerisat und ein Antistatikum enthält und wobei der Abbaufaktor des peroxidisch abgebauten Propylenhomopolyinerisats im Bereich von 3 bis 10 liegt und dieser Abbaufaktor definiert ist als

$$A = \frac{S_{G(PP)}}{S_{P(PP)}}$$

worin

$S_{G(PP)}$ der Schmelzindex des abgebauten Propylenhomopolymer-Granulats ist und
$S_{P(PP)}$ der Schmelzindex des Propylenhomopolymer-Ausgangspulvers ist und bei kleiner 1,5 g/10 min liegt, und

die jeweiligen Schmelzindices nach DIN 53 735 bei 21,6 N und 230 °C bestimmt werden und eine Oberflächenschicht der Mehrschichtfolie niedrig siegelnd ist und ein Ethylen-Propylen-Butylen-Terpolymeres und ein Propylen-Butylen-Copolymeres enthält und die andere Oberflächenschicht metallisierbar und coronabehandelt ist und eine Dicks von größer 0,5 µm aufweist. und wobei der Antistatikumgehalt der Basisschicht zwischen 0,02 Gew.-% und 0,1 Gew.-% liegt und die Deckschichten nicht mit Antistatikum ausgerüstet sind.

2. Polyolefin-Mehrschichtfolie nach Anspruch 1, dadurch gekennzeichnet, daß der peroxidische Abbaufaktor der Basisschicht im Bereich von 4 bis 8 liegt.

3. Polyolefin-Mehrschichtfolie nach Anspruch 1 oder 2, dadurch gekennzeichnet, daß der Ethylen-Propylen-Butylen-Gehalt in der Ter/Copolymermischung der Siegelschicht 0,1 bis 7 Gew.-% Ethylen, 53 bis 89,9 Gew.-% Propylen und 10 bis 40 Gew.-% Butylen beträgt.

4. Polyolefin-Mehrschichtfolie nach einem oder mehreren der Ansprüche 1 bis 3, dadurch gekennzeichnet, daß die Siegelschicht ein Antiblockmittel enthält.

5. Polyolefin-Mehrschichtfolie nach Anspruch 4, dadurch gekennzeichnet, daß die Siegelschicht ein grobkörniges Antiblockmittel enthält.

6. Polyolefin-Mehrschichtfolie nach einem oder mehreren der Ansprüche 1 bis 5, dadurch gekennzeichnet, daß der Ethylengehalt in der metalliserbaren Oberflächenschicht 2,0 bis 7,0 Gew.-% beträgt (Rest Proyplen).

7. Polyolefin-Mehrschichtfolie nach einem oder mehreren der Ansprüche 1 bis 6, dadurch gekennzeichnet, daß das Propylen-Ethylen-Copolymere der metalliserbaren Oberflächenschicht einen Verteilungsfaktor $V_F$ von größer 9 besitzt.

8. Polyolefin-Mehrschichtfolie nach einem oder mehreren der Ansprüche 1 bis 7, dadurch gekennzeichnet, daß das Propylen-Ethylen-Copolymere der metallisierbaren Oberflächenschicht eine Thermooxidationstemperatur $T_{OX}$ von größer 230 °C besitzt.

9. Polyolefin-Mehrschichtfolie nach einem oder mehreren der Ansprüche 1 bis 8, dadurch gekennzeichnet, daß die metallisierbare Oberflächenschicht ein Antiblockmittel enthält.

10. Polyolefin-Mehrschichtfolie nach einem oder mehreren der Ansprüche 1 bis 9, dadurch gekennzeichnet, daß die Siegelschicht eine Dicke von 0,4 bis 1,0 µm besitzt.

11. Polyolefin-Mehrschichtfolie nach einem oder mehreren der Ansprüche 1 bis 10, dadurch gekennzeichnet, daß die Basisschicht und/oder die Siegelschicht und/oder die metallisierbare Oberflächenschicht Additive enthält.

12. Verfahren zur Herstellung einer Polyolefin-Mehrschichtfolie nach Anspruch 1, dadurch gekennzeichnet, daß man die den einzelnen Schichten der Folie entsprechenden Schmelzen durch eine Flachdüse coextrudiert, die so erhaltenen Folie zur Verfestigung abkühlt, die Folie biaxial streckt, die biaxial gestreckte Folie thermofixiert und an der zur Coronabehandlung vorgesehenen Oberflächenschicht coronabehandelt.

13. Metallisierte Polyolefin-Mehrschichtfolie, gekennzeichnet durch eine Polyolefin-Mehrschichtfolie gemäß einem oder mehrerer der Ansprüche 1 bis 11, dadurch gekennzeichnet, daß die metallisierbare coronabehandelte Oberflächenschicht mit einem Metall metallisiert ist.

14. Metallisierte Polyolefin-Mehrschichtfolie nach Anspruch 13, dadurch gekennzeichnet, daß das Metall Aluminium, Zink, Gold, Silber oder eine Legierung aus einem oder mehreren dieser Metalle ist.

15. Beidseitig niedrig siegelnde metallisierte Polyolefin-Mehrschichtfolie, gekennzeichnet durch eine metallisierte Polyolefin-Mehrschichtfolie gemäß Anspruch 13 oder 14, welche auf ihrer Metalloberfläche mit einer siegelnden Polyolefinfolie abgedeckt ist.

16. Verwendung der Polyolefin-Mehrschichtfolie nach einem oder mehreren der Ansprüche 1 bis 11 als Verpackungsfolie und zur Herstellung von Laminaten mit Papier, Pappe, metallisierten Kunststoffolien und Kunststoffolien.

17. Verwendung der metallisierten Polyolefin-Mehrschichtfolien nach Anspruch 13 oder 14 als Verpackungsfolie und zur Herstellung von Laminaten mit Papier, Pappe und Kunststoffolien.

18. Verwendung einer Polyolefin-Mehrschichtfolie nach einem oder mehreren der Ansprüche 1 bis 11 zur Metallisierung auf der Oberfläche der Ethylen-Propylen-Copolymerschicht.

**Claims**

1. Metallizable, biaxially oriented, multilayer polyolefin film comprising at least one base layer which is surrounded on both sides by surface layers, characterized in that the base layer contains a peroxidically degraded propylene homopolymer and an antistatic, and where the degradation factor of the peroxidically degraded propylene homopoylmer is in the range from 3 to 10 and this degradation factor is defined as

$$A = \frac{S_{G(PP)}}{S_{P(PP)}}$$

in which $S_{G(PP)}$ is the melt flow index of the degraded propylene homopolymer granules and $S_{P(PP)}$ is the melt flow index of the propylene homopolymer starting powder and is less than 1.5g/10 min, and the respective melt flow indices are determined in accordance with DIN 53 735 at 21.6 N and 230°C and a surface layer of the multilayer film has a low heat-sealing temperature and contains an ethylene-propylene-butylene termopolymer and a propylene-butylene copolymer and the other surface layer is metallizable and has been corona treated and has a thickness of greater than 0.5 μm and wherein the base layer comprises 0.02 to 0.1% by weight of an antistatic agent and wherein no antistatic agent is incorporated in the cover layers.

**2.** Multilayer polyolefin film according to Claim 1, characterized in that the peroxide degradation factor of the base layer is in the range from 4 to 8.

**3.** Multilayer polyolefin film according to Claim 1 or 2, characterized in that the ethylene-propylene-butylene content in the ter/copolymer mixture of the heat-sealable layer is from 0.1 to 7 % by weight of ethylene, from 53 to 89.9% by weight of propylene and from 10 to 40 % by weight of butylene.

**4.** Multilayer polyolefin film according to one or more of Claims 1 to 3, characterized in that the heat-sealable layer contains an antiblocking agent.

**5.** Multilayer polyolefin film according to Claim 4, characterized in that the heat-sealable layer contains a coarsely particulate antiblocking agent.

**6.** Multilayer polyolefin film according to one or more of Claims 1 to 5, characterized in that the ethylene content in the metallizable surface layer is from 2.0 to 7.0 % by weight (remainder propylene).

**7.** Multilayer polyolefin film according to one or more of Claims 1 to 6, characterized in that the propylene-ethylene copolymer of the metallizable surface layer has a distribution factor $V_F$ of greater than 9.

**8.** Multilayer polyolefin film according to one or more of Claims 1 to 7, characterized in that the propylene-ethylene copolymer of the metallizable surface layer has a thermooxidation temperature $T_{ox}$ of greater than 230° C.

**9.** Multilayer polyolefin film according to one or more of Claims 1 to 8, characterized in that the metallizable surface layer contains an antiblocking agent.

**10.** Multilayer polyolefin film according to one or more of Claims 1 to 9, characterized in that the heat-sealable layer has a thickness of from 0.4 to 1.0 μm.

**11.** Multilayer polyolefin film according to one or more of Clams 1 to 10, characterized in that the base layer and/or the heat-sealable layer and/or the metallizable surface layer contains additives.

**12.** Process for the production of a multilayer polyolefin film according to Claim 1, characterized in that the melts corresponding to the individual layers of the film are coextruded through a flat-film die, the resultant film is cooled for solidification, the film is biaxially stretched, the biaxially stretched film is heat-set, and the heat-set film is corona-treated on the surface layer intended for the corona treatment.

**13.** Metallized multilayer polyolefin film, characterized by a multilayer polyolefin film according to one or more of Claims 1 to 11, characterized in that the metallizable, corona-treated surface layer has been metallized with a metal.

**14.** Metallized multilayer polyolefin film, according to Claim 13, characterized in that the metal is aluminium, zinc, gold, silver or an alloy of one or more of these metals.

**15.** Metallized multilayer polyolefin film with a low heat-sealing temperature on both sides, characterized by a metallized multilayer polyolefin film according to Claim 13 or 14 which is covered on its metal surface by a heat-sealing polyolefin film.

16. Use of the multilayer polyolefin film according to one or more of Claims 1 to 11 as a packaging film and for the production of laminates with paper, board metallized plastic films and plastic films.

17. Use of the metallized multilayer polyolefin films according to Claim 13 or 14 as a packaging film and for the production of laminates with paper, board and plastic films

18. Use of a multilayer polyolefin film according to one or more of Claims 1 to 11 for metallization on the surface of the ethylene-propylene copolymer layer.

## Revendications

1. Pellicule multicouche polyoléfinique orientée biaxialement, métallisable, constituée d'au moins une couche de base qui est entourée des deux côtés par des couches superficielles, caractérisée en ce que la couche de base contient um homopolymère de propylène dégradé par un peroxyde et un agent antistatique, et le facteur de dégradation de l'homopolmyère de propylène dégradé par un peroxyde étant dans la plage allant de 3 à 10, et ce facteur de dégradation étant défini par le rapport

$$A = \frac{S_{G(PP)}}{S_{P(PP)}}$$

dans lequel $S_{G(PP)}$ est l'indice de fluidité à chaud du produit granulé constitué d'homopolymère de propylène dégradé et $S_{P(PP)}$ est l'indice de fluidité à chaud de la poudre initiale d'homopolymère de propylène et est inférieur à 1,5 g/10 min, et
les indices de fluidité à chaud respectifs étant déterminés à 230°C et sous une charge de 21,6 N, selon DIN 53 735, et un couche superficielle de la pellicule multicouche est soudable à basse température et contient un terpolymère éthylène/propylène/butylène et un copolymère propylène/butylène, et l'autre couche superficielle est traitée par effet couronne et métallisable, et présente une épaisseur de plus de 0,5 µm et la couche de base contenant entre 0,02 et 0,1% en poids d'agent antistatique et les couches superficielles n'ëtant pas munies d'agent antistatique.

2. Pellicule multicouche polyoléfinique selon la revendication 1, caractérisée en ce que le facteur de dégradation par un peroxyde de la couche de base se situe dans la plage allant de 4 à 8.

3. Pellicule multicouche polyoléfinique selon la revendication 1 ou 2, caractérisée en ce que les teneurs en éthylène-propylène-butylène du mélange de copolymère et terpolymère de la couche de soudage vont de 0,1 à 7 % en poids pour l'éthylène, de 53 à 89.9 % en poids pour le propylène et de 10 à 40 % an poids pour le butylène.

4. Pellicule multicouche polyoléfinique selon une ou plusieurs des revendications 1 à 3, caractérisée en ce que la couche de soudage contient un agent anti-adhérence de contact.

5. Pellicule multicouche polyoléfinique selon la revendication 4, caractérisée en ce que la couche de soudage contient un agent anti-adhérence de contact à gros grains.

6. Pellicule multicouche polyoléfinique selon une ou plusieurs ces revendications 1 à 5, caractérisée en ce que la teneur en éthylène de la couche superficelle métallisable va de 2,0 à 7,0 % en poids (le reste étant constitué de propylène).

7. Pellicule multicouche polyoléfinique selon une ou plusieurs des revendications 1 à 6, caractérisée en ce que le copolymère éthylène-propylène de la couche superficielle métallisable a un facteur de distribution $V_F$ supérieur à 9.

8. Pellicule multicouche polyoléfinique selon une ou plusieurs des revendications 1 à 7, caractérisée en ce que le copolymère éthylène/propylène de la couche superficielle métallisable a une température de thermo-oxydation $T_{ox}$ supérieure à 230°C.

9. Pellicule multicouche polyoléfinique selon une ou plusieurs des revendications 1 à 8, caractérisée en ce que la couche superficielle métallisable contient un agent anti-adhérence de contact.

10. Pellicule multicouche polyoléfinique selon une ou plusieurs des revendications 1 à 9, caractérisée en ce que la couche de soudage a une épaisseur de 0,4 à 1 µm.

11. Pellicule multicouche polyoléfinique salon une ou plusieurs des revendications 1 à 10, caractérisée en ce que la couche de base et/ou la couche de soudage et/ou la couche superficielle métallisable contient(tiennent) des additifs.

12. Procédé pour la fabrication d'une pellicule multicouche polyoléfinique selon la revendication 1, caractérisé en ce que les masses fondues correspondant aux couches individuelles de la pellicule sont coextrudées à travers une filière plate, la pellicule ainsi obtenue est refroidie peur la solidification, la pellicule est étirée biaxialement, la pellicule étirée biaxialement est thermofixée, puis traitée par effet couronne sur la couche superficielle prévue pour le traitement par effet couronne.

13. Pellicule multicouche polyoléfinique métallisée, caractérisée par une pellicule multicouche polyoléfinique selon une ou plusieurs des revendications 1 à 11, caracterisée en ce que la couche superficielle métallisable, traitée par effet couronne, est métallisée avec un métal.

14. Pellicule multicouche polyoléfinique métallisée selon la revendication 13, caractérisée an ce que le métal est l'aluminium, le zinc, l'or, l'argent ou un alliage d'un ou plusieurs de ces métaux.

15. Pellicule multicouche polyoléfinique métallisée soudable à basse température des doux côtés, caractérisée par une pellicule multicouche polyoléfinique métallisée selon la revendication 13 ou 14, qui est recouverte, sur sa face métallisée, par une pellicule polyoléfinique soudable.

16. Utilisation de la pellicule multicouche polyoléfinique selon une ou plusieurs des revendications 1 à 11, en tant que pellicule d'emballage et pour la fabrication de stratifiés avec du papier, du carton, des pellicules de matière plastique métallisées et des pellicules de matière plastique.

17. Utilisation des pellicules multicouches polyoléfiniques métallisées selon la revendication 13 ou 14, en tant que pellicule d'emballage et pour la fabrication de stratifiés avec du papier, du carton et des pellicules de matière plastique.

18. Utilisation d'une pellicule multicouche polyoléfinique selon une ou plusieurs des revendications 1 à 11, pour la métallisation sur la surface de la couche de copolymère éthylène/propylène.